# EUROPÄISCHE PATENTANMELDUNG

(11) **EP 3 338 934 A1**
(43) Veröffentlichungstag der Anmeldung: **27.06.2018**
(21) Anmeldenummer: 16206534.6
(22) Anmeldetag: 23.12.2016
(51) Int. Cl.: B23K 9/032, B23K 26/302, B23B 51/04

(54) **VERFAHREN ZUR HERSTELLUNG EINES BOHRSCHAFTES FÜR EINE NASSBOHRKRONE**

(71) Anmelder: HILTI Aktiengesellschaft, 9494 Schaan (LI)
(72) Erfinder: Schroeder, Florian, 7304 Maienfeld (CH); Weber, Christoph, 6315 Oberägeri (CH); Schneider, Roland, 6824 Schlins (AT)
(74) Vertreter: Hilti Aktiengesellschaft Corporate Intellectual Property

(57) **Zusammenfassung**

Verfahren zur Herstellung eines Bohrschaftes (18, 48) für eine Nassbohrkrone (10, 40), die ein Bohrloch (27) mit einem Bohrlochdurchmesser (d₂) und einen Bohrkern (26) mit einem Kerndurchmesser (d₁) erzeugt, bei dem N, N ≥ 1 Bandmaterialien (31; 53A, 53B, 53C) zu einem Rohrkörper (32, 54) geformt werden und der Rohrkörper (32, 54) an den Bandkanten über N Verbindungsschweißnähte (31; 53A, 53B, 53C) stoffschlüssig verbunden wird, wobei zumindest ein Bandmaterial der N, N ≥ 1 Bandmaterialien (31; 53A, 53B, 53C) vor dem stoffschlüssigen Verbinden der Bandkanten mit mindestens einer Vertiefung (37A, 37B, 37C) versehen wird.

## Beschreibung

### Technisches Gebiet

Die vorliegende Erfindung betrifft ein Verfahren zur Herstellung eines Bohrschaftes für eine Nassbohrkrone gemäß dem Oberbegriff des Anspruchs 1.

### Stand der Technik

Bohrkronen bestehen aus mehreren Bohrkronenabschnitten, die als Schneidabschnitt und Bohrschaftabschnitt ausgebildet sind. Der Schneidabschnitt umfasst einen Ringabschnitt und ein oder mehrere Schneidsegmente, die mit dem Ringabschnitt verschweißt, verlötet, verschraubt oder in einer anderen geeigneten Befestigungsart am Ringabschnitt befestigt sind. Der Bohrschaftabschnitt umfasst einen rohrförmigen Bohrschaft, einen Deckel und ein Einsteckende, über das die Bohrkrone in der Werkzeugaufnahme eines Kernbohrgerätes befestigt wird. Der Bohrschaft wird aus einem rohrförmigen Material gefertigt oder aus einem ebenen Bandmaterial, das zu einem Rohr umgeformt und an den Bandkanten durch Längsnahtschweißen verbunden wird. Der Schneidabschnitt und Bohrschaftabschnitt sind mittels einer Verbindungseinrichtung lösbar oder unlösbar verbunden. Bei Bohrkronen mit einer unlösbaren Verbindungseinrichtung zwischen dem Schneidabschnitt und Bohrschaftabschnitt können der Ringabschnitt des Schneidabschnitts und der Bohrschaft monolithisch ausgebildet sein, alternativ kann der Ringabschnitt stoffschlüssig mit dem Bohrschaft verbunden sein.

Im Bohrbetrieb erzeugt eine Bohrkrone in einem Werkstück einen Bohrkern mit einem Kerndurchmesser und ein Bohrloch mit einem Bohrlochdurchmesser. Die Schneidsegmente bilden einen Schneidring mit einem Innendurchmesser, der dem Kerndurchmesser entspricht, und einem Außendurchmesser, der dem Bohrlochdurchmesser entspricht. Beim Bohren wird zwischen Nassbohren und Trockenbohren unterschieden. Bohrkronen zum Nassbohren (Nassbohrkronen) unterscheiden sich im Aufbau von Bohrkronen zum Trockenbohren (Trockenbohrkronen). Beim Nassbohren ist eine Kühl- und Spülflüssigkeit erforderlich, die als Kühlflüssigkeit die Schneidsegmente der Bohrkrone kühlt und als Spülflüssigkeit Bohrklein aus dem Bohrloch abtransportiert. Saubere Kühl- und Spülflüssigkeit wird in der Regel über einen Innenspalt zwischen dem Bohrkern und dem Bohrschaft zugeführt und mit Bohrklein versetzte, verbrauchte Kühl- und Spülflüssigkeit über einen Außenspalt zwischen dem Bohrschaft und dem Bohrloch abgeführt.

Um ausreichend Kühl- und Spülflüssigkeit an die Bearbeitungstelle im Werkstück zu transportieren, gilt bei der Konstruktion von Nassbohrkronen die Regel, dass der Innenspalt unter Berücksichtigung sämtlicher zulässigen Abweichungen eine Breite von mindestens 0.4 mm aufweisen sollte, wobei die Breite des Innenspaltes auch als Innenüberstand bezeichnet wird. Beim Nassbohren von armiertem Beton, d.h. von Beton mit eingebetteten Armierungseisen, können während des Bohrens Eisenkeile entstehen, die durch die Nassbohrkrone vom Armierungseisen getrennt werden und sich vom Bohrkern lösen. Die Eisenkeile können sich im Innenspalt zwischen dem Bohrschaft und dem Bohrkern verkeilen und zu einer Unterbrechung des Bohrprozesses und einem Stillstand des Kernbohrgerätes führen. Um die Gefahr von sich verklemmenden Eisenkeilen im Innenspalt zwischen Bohrkern und Bohrschaft zu reduzieren, sollte der Innenüberstand auf Werte kleiner als 0.4 mm, insbesondere kleiner als 0.2 mm, begrenzt werden. Je kleiner der Innenspalt zwischen dem Bohrkern und der Innenseite des Bohrschaftes ist, umso geringer ist das Risiko, dass sich ein abgetrennter Eisenkeil eines Armierungseisens aus dem Bohrkern löst und in den Innenspalt zwischen dem Bohrkern und der Innenseite des Bohrschaftes eindringt.

Um bei Nassbohrkronen mit geringem Innenüberstand ausreichend Kühl- und Spülflüssigkeit an die Bearbeitungstelle im Werkstück zu transportieren, sollen die Nassbohrkronen mit Transportkanälen für die Kühl- und Spülflüssigkeit versehen werden. Nachteilig ist, dass die Herstellung von Transportkanälen für die Kühl- und Spülflüssigkeit auf der Innenseite des Bohrschaftes einen hohen Fertigungsaufwand erzeugt.

### Darstellung der Erfindung

Die Aufgabe der vorliegenden Erfindung besteht darin, ein Verfahren zur Herstellung eines Bohrschaftes für eine Nassbohrkrone bereitzustellen, mit dem auf einer Innenseite des Bohrschaftes Transportkanäle für eine Kühl- und Spülflüssigkeit erzeugt werden können. Dabei soll der Fertigungsaufwand bei der Herstellung des Bohrschaftes möglichst gering sein.

Diese Aufgabe wird bei dem eingangs genannten Verfahren erfindungsgemäß durch die Merkmale des unabhängigen Anspruchs 1 gelöst. Vorteilhafte Weiterbildungen sind in den abhängigen Ansprüchen angegeben.

Das Verfahren zur Herstellung eines Bohrschaftes für eine Nassbohrkrone ist erfindungsgemäß dadurch gekennzeichnet, dass zumindest ein Bandmaterial der N, N ≥ 1 Bandmaterialien vor dem stoffschlüssigen Verbinden der Bandkanten mit mindestens einer Vertiefung versehen wird. Der Bohrschaft wird aus einem Bandmaterial (N = 1) oder mehreren Bandmaterialien (N ≥ 2) hergestellt, wobei die Anzahl der verwendeten Bandmaterialen der Anzahl der Verbindungsschweißnähte entspricht. Bei der Herstellung des Bohrschaftes werden die Bandmaterialien zu einem Rohrkörper geformt und an den zusammenstoßenden Bandkanten verschweißt. Die Herstellung des Bohrschaftes durch Formen und Schweißen von Bandmaterialien ermöglicht es, auf der Innenseite des Bohrschaftes mit geringem Fertigungsaufwand Vertiefungen herzustellen, die beim fertigen Bohrschaft als Transportkanäle für die Kühl- und Spülflüssigkeit dienen. Die Vertiefungen können an einer Innenseite des Bohrschaftes, an einer Außenseite des Bohrschaftes oder an einer Außen- und Innenseite des Bohrschaftes erzeugt werden.

In einer ersten bevorzugten Variante werden die N, N ≥ 1 Bandmaterialien zu einem Spiralrohrkörper geformt und der Spiralrohrkörper wird an den Bandkanten über N spiralförmige Verbindungsschweißnähte stoffschlüssig verbunden. Ein Bohrschaft, der als geschweißter Spiralrohrkörper ausgebildet ist, weist mindestens eine spiralförmige Verbindungsschweißnaht auf, die für den Bohrschaft als Versteifungselement wirkt und die Steifigkeit des Bohrschaftes gegenüber einem rohrförmigen Bohrschaft der gleichen Wandstärke erhöht. Alternativ können Bandmaterialien mit geringeren Wandstärken eingesetzt werden, die beim fertigen Bohrschaft die gleiche Steifigkeit wie ein rohrförmiger Bohrschaft aufweisen. Damit erhöht die Verwendung eines geschweißten Spiralrohrkörpers als Bohrschaft entweder die Steifigkeit des Bohrschaftes im Bohrbetrieb und/oder reduziert das Gewicht des Bohrschaftes. Ein Bohrschaft mit einer höheren Steifigkeit verbessert die Stabilität des Bohrschaftes beim Bohren.

In einer zweiten bevorzugten Variante werden die N, N ≥ 1 Bandmaterialien zu einem Längsrohrkörper geformt werden und der Längsrohrkörper wird an den Bandkanten über N längsverlaufende Verbindungsschweißnähte stoffschlüssig verbunden. Ein Bohrschaft, der als geschweißter Längsrohrkörper ausgebildet ist, weist mindestens eine längsverlaufende Verbindungsschweißnaht auf, die für den Bohrschaft als Versteifungselement wirkt und die Steifigkeit des Bohrschaftes gegenüber einem rohrförmigen Bohrschaft der gleichen Wandstärke erhöht. Alternativ können Bandmaterialien mit geringeren Wandstärken eingesetzt werden, die beim fertigen Bohrschaft die gleiche Steifigkeit wie ein rohrförmiger Bohrschaft aufweisen. Damit erhöht die Verwendung eines geschweißten Längsrohrkörpers als Bohrschaft entweder die Steifigkeit des Bohrschaftes im Bohrbetrieb und/oder reduziert das Gewicht des Bohrschaftes. Ein Bohrschaft mit einer höheren Steifigkeit verbessert die Stabilität des Bohrschaftes beim Bohren.

In einer ersten bevorzugten Variante wird die mindestens eine Vertiefung des Rohrkörpers an einer Innenseite des Bohrschaftes erzeugt. Bei der Herstellung des Bohrschaftes werden die Bandmaterialien zum Rohrkörper geformt und an den Bandkanten verschweißt. Bevor die Bandkanten verschweißt werden, werden auf der Innenseite des Rohrkörpers Vertiefungen erzeugt, die im Bohrbetrieb als Transportkanäle für saubere Kühl- und Spülflüssigkeit dienen. Die Anzahl der Vertiefungen und die Geometrie der Vertiefungen können an die benötigte Flüssigkeitsmenge der sauberen Kühl- und Spülflüssigkeit angepasst werden.

In einer zweiten bevorzugten Variante wird die mindestens eine Vertiefung des Rohrkörpers an einer Außenseite des Bohrschaftes erzeugt. Bei der Herstellung des Bohrschaftes werden die Bandmaterialien zum Rohrkörper geformt und an den Bandkanten verschweißt. Bevor die Bandkanten verschweißt werden, werden auf der Außenseite des Rohrkörpers Vertiefungen erzeugt, die im Bohrbetrieb als Transportkanäle für mit Bohrklein versetzte, verbrauchte Kühl- und Spülflüssigkeit dienen.

In einer dritten bevorzugten Variante werden mindestens eine Vertiefung des Rohrkörpers an einer Innenseite des Bohrschaftes und mindestens eine Vertiefung des Rohrkörpers an einer Außenseite des Bohrschaftes erzeugt. Bei der Herstellung des Bohrschaftes werden die Bandmaterialien zum Rohrkörper geformt und an den Bandkanten verschweißt. Bevor die Bandkanten verschweißt werden, werden auf der Innen- und Außenseite des Rohrkörpers Vertiefungen erzeugt. Die Vertiefungen auf der Innenseite des Bohrschaftes dienen als Transportkanäle für saubere Kühl- und Spülflüssigkeit und die Vertiefungen auf der Außenseite des Bohrschaftes dienen als Transportkanäle für mit Bohrklein versetzte, verbrauchte Kühl- und Spülflüssigkeit.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine erste Ausführungsform einer Nassbohrkrone mit einem spiralrohrförmigen Bohrschaft, der mittels des erfindungsgemäßen Verfahrens zur Herstellung eines Bohrschaftes mit Vertiefungen auf der Innenseite hergestellt wurde;
- FIGN. 2A, B: einen Längsschnitt durch den Bohrschaft der ersten Nassbohrkrone der FIG. 1 entlang der Schnittlinie A-A in FIG. 1B (FIG. 2A) sowie ein Detail des Bohrschaftes der FIG. 2A in einer vergrößerten Darstellung (FIG. 2B);
- FIG. 3: eine zweite Ausführungsform einer Nassbohrkrone mit einem längsnahtgeschweißten Bohrschaft, der mittels des erfindungsgemäßen Verfahrens zur Herstellung eines Bohrschaftes mit Vertiefungen auf der Außen- und Innenseite hergestellt wurde;
- FIGN. 4A, B: einen Querschnitt durch den Bohrschaft der zweiten Nassbohrkrone der FIG. 3 entlang der Schnittlinie A-A in FIG. 3 (FIG. 4A) sowie ein Detail des Bohrschaftes der FIG. 4A in einer vergrößerten Darstellung (FIG. 4B).

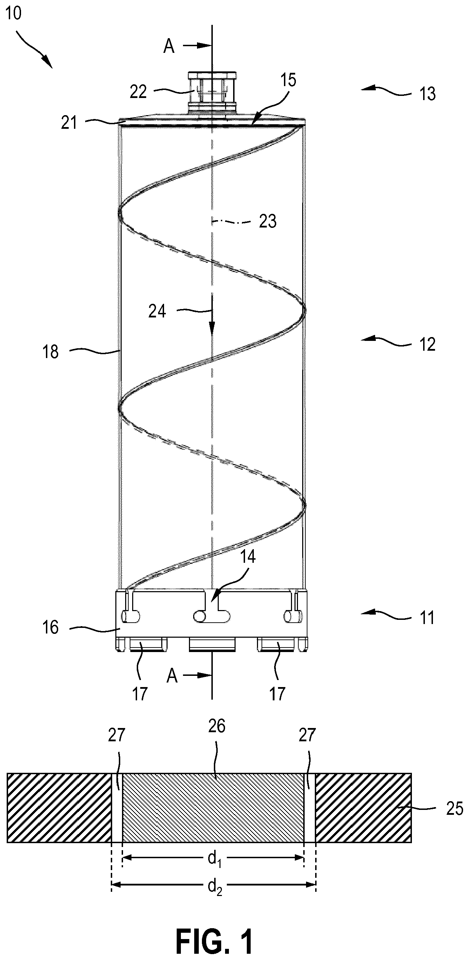

**FIG. 1** zeigt eine erste Ausführungsform einer Nassbohrkrone **10** mit einem spiralrohrförmigen Bohrschaft, der mittels des erfindungsgemäßen Verfahrens zur Herstellung eines Bohrschaftes mit mehreren Vertiefungen auf der Innenseite hergestellt wurde. Die Nassbohrkrone 10 wird im Folgenden als erste Nassbohrkrone 10 bezeichnet und umfasst einen Schneidabschnitt **11**, einen Bohrschaftabschnitt **12** und einen Aufnahmeabschnitt **13**, wobei der Schneidabschnitt 11 und der Bohrschaftabschnitt 12 über eine erste Verbindungseinrichtung **14** verbunden sind und der Bohrschaftabschnitt 12 und der Aufnahmeabschnitt 13 über eine zweite Verbindungseinrichtung **15** verbunden sind.

Die erste Verbindungseinrichtung 14 ist im Ausführungsbeispiel als lösbare Verbindungseinrichtung in Form einer kombinierten Steck-Dreh-Verbindung ausgebildet und die zweite Verbindungseinrichtung 15 ist im Ausführungsbeispiel als nicht-lösbare Verbindungseinrichtung in Form einer Schweißverbindung ausgebildet. Alternativ eignen sich sämtliche lösbaren und nicht-lösbaren Verbindungseinrichtungen für die erste Verbindungseinrichtung 14 zwischen dem Schneidabschnitt 11 und dem Bohrschaftabschnitt 12 und für die zweite Verbindungseinrichtung 15 zwischen dem Bohrschaftabschnitt 12 und dem Aufnahmeabschnitt 13. Die erste Bohrkrone 10 kann eine lösbare erste und zweite Verbindungseinrichtung 14, 15, eine lösbare erste Verbindungseinrichtung 14 und nicht-lösbare zweite Verbindungseinrichtung 15, eine nicht-lösbare erste Verbindungseinrichtung 14 und lösbare zweite Verbindungseinrichtung 15 oder eine nicht-lösbare erste und zweite Verbindungseinrichtung 14, 15 aufweisen. Eine Verbindungseinrichtung wird als lösbar bezeichnet, wenn die Verbindung vom Anwender zerstörungsfrei gelöst werden kann, wie beispielsweise eine Steckverbindung, eine Stiftverbindung oder eine Gewindeverbindung. Eine Verbindungseinrichtung wird als nicht-lösbar bezeichnet, wenn der Anwender die Verbindung nur durch Zerstörung der Verbindungsmittel lösen kann, wie beispielsweise eine Lötverbindung, eine Schweißverbindung oder eine Klebeverbindung.

Der Schneidabschnitt 11 umfasst einen Ringabschnitt **16** und mehrere Schneidsegmente **17**, die mit dem Ringabschnitt 16 verbunden sind. Die Schneidsegmente 17 werden ringförmig angeordnet und bilden einen Schneidring mit Zwischenräumen. Der Schneidabschnitt 11 kann anstatt mehrerer Schneidsegmente 17 auch ein einzelnes als geschlossener Schneidring ausgebildetes Schneidsegment aufweisen. Die Schneidsegmente 17 sind mit dem Ringabschnitt 16 verschweißt, verlötet, verschraubt oder in einer anderen geeigneten Befestigungsart am Ringabschnitt 16 befestigt. Bei einer nicht-lösbaren ersten Verbindungseinrichtung 14 kann der Ringabschnitt 16 entfallen und die Schneidsegmente 17 können direkt mit dem Bohrschaftabschnitt 12 verbunden werden.

Der Bohrschaftabschnitt 12 umfasst einen spiralrohrförmigen Bohrschaft **18**, der mit dem Schneidabschnitt 11 über die erste Verbindungseinrichtung 14 und mit dem Aufnahmeabschnitt 13 über die zweite Verbindungseinrichtung 15 verbunden ist. Der Aufnahmeabschnitt 13 umfasst einen Deckel **21** und ein Einsteckende **22**, über das die erste Nassbohrkrone 10 in einer Werkzeugaufnahme eines Kernbohrgerätes befestigt wird. Im Bohrbetrieb wird die erste Nassbohrkrone 10 vom Kernbohrgerät um eine Bohrachse **23** angetrieben und in einer Bohrrichtung **24** parallel zur Bohrachse 23 in ein zu bearbeitendes Werkstück **25** bewegt. Die erste Nassbohrkrone 10 erzeugt im Werkstück 25 einen Bohrkern **26** mit einem Kerndurchmesser **d₁** und ein Bohrloch **27** mit einem Bohrlochdurchmesser **d₂.** Die Schneidsegmente 17 bilden einen Schneidring mit einem Innendurchmesser, der dem Kerndurchmesser d₁ entspricht, und einem Außendurchmesser, der dem Bohrlochdurchmesser d₂ entspricht.

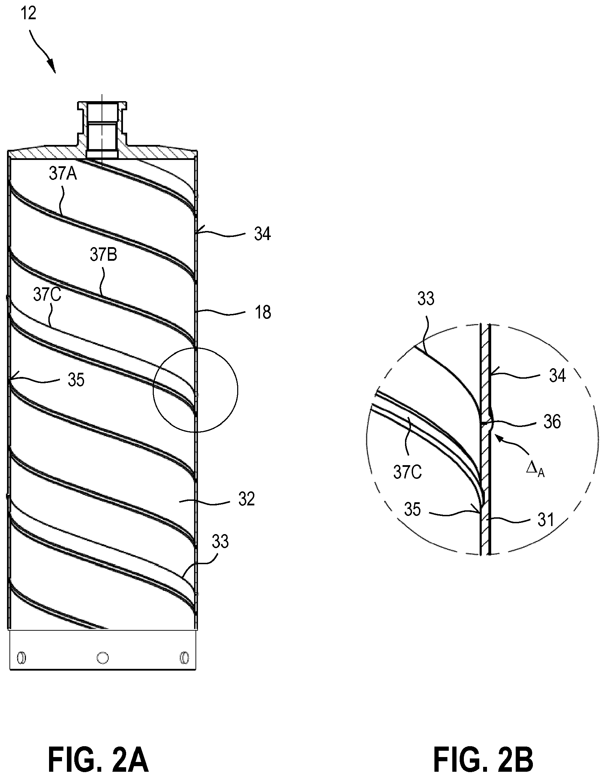

**FIGN. 2A****, B** zeigt einen Längsschnitt durch den Bohrschaft 18 der ersten Nassbohrkrone 10 der FIG. 1 entlang der Schnittlinie A-A in FIG. 1B (FIG. 2A) sowie ein Detail des Bohrschaftes 18 der FIG. 2A in einer vergrößerten Darstellung (FIG. 2B).

Der Bohrschaft 18 ist als geschweißter Spiralrohrkörper ausgebildet, der aus einem Bandmaterial **31** in Form eines ebenen Blechs durch Formen und Schweißen gefertigt wurde. Das ebene Bandmaterial 31 wurde zu einem Spiralrohrkörper **32** umgeformt und an den Bandkanten über eine spiralförmige Verbindungsschweißnaht **33** verbunden. Die spiralförmige Verbindungsschweißnaht 33 wirkt für den Bohrschaft 18 als Versteifungselement und erhöht die Steifigkeit des Bohrschaftes 18 gegenüber einem rohrförmigen Bohrschaft der gleichen Wandstärke.

Die spiralförmige Verbindungsschweißnaht 33 steht an einer Außenseite **34** des Bohrschaftes 18 mit einem Außenüberstand **Δ_{A}** gegenüber dem Spiralrohrkörper 32 über und ist an einer Innenseite **35** des Bohrschaftes 18 im Wesentlichen bündig mit dem Spiralrohrkörper 32 ausgebildet. Um die an der Außenseite 34 überstehende spiralförmige Verbindungsschweißnaht 33 zu erzeugen, wird beim Schweißen des Spiralrohrkörpers 32 ein Nahtmaterial **36** verwendet, das das benötigte Materialvolumen zur Verfügung stellt.

Das Nahtmaterial 36 kann pulverförmig, drahtförmig oder bandförmig ausgebildet sein. Über die Materialeigenschaften des Nahtmaterials 36 können die Eigenschaften der spiralförmigen Verbindungsschweißnaht 33 angepasst werden. Das Nahtmaterial 36 kann die gleichen Materialeigenschaften oder unterschiedliche Materialeigenschaften wie das Bandmaterial 31 aufweisen. Wenn Nahtmaterial 36 und Bandmaterial 31 die gleichen Materialeigenschaften aufweisen, entsteht beim Schweißen der Bandkanten ein gleichmäßiger Übergang und das Nahtmaterial 36 kann sich gut mit dem Bandmaterial 31 verbinden. Durch den Einsatz von Nahtmaterial 36, das eine höhere Zugfestigkeit und/oder Verschleißbeständigkeit als das Bandmaterial 31 aufweist, können die Eigenschaften der spiralförmigen Verbindungsschweißnaht 33 beeinflusst werden, so dass die Führung des Bohrschaftes 18 über die spiralförmige Verbindungsschweißnaht 33 möglichst während der gesamten Lebensdauer des Bohrschaftes 18 gewährleistet ist.

Die erste Nassbohrkrone 10 zeigt eine spiralförmige Verbindungsschweißnaht 33, die an der Außenseite 34 des Bohrschaftes 18 übersteht. Die an der Außenseite 34 überstehende spiralförmige Verbindungsschweißnaht 33 ermöglicht beim Bohren mit der ersten Nassbohrkrone 10 eine Führung des Bohrschaftes 18 über das Bohrloch 27. Alternativ kann die spiralförmige Verbindungsschweißnaht 33 an der Außen- und Innenseite 34, 35 des Bohrschaftes 18 mit einem Außen- und Innenüberstand Δ_{A}, Δ_{I} oder an der Innenseite 35 des Bohrschaftes 18 mit einem Innenüberstand Δ_{I} gegenüber dem Spiralrohrkörper 32 überstehen. Der Überstand der spiralförmigen Verbindungsschweißnaht 33 wird so eingestellt, dass die spiralförmige Verbindungsschweißnaht 33 an der Außenseite 34 des Bohrschaftes 18 mit dem Bohrloch 27 oder an der Innenseite 35 des Bohrschaftes 18 mit dem Bohrkern 26 in Kontakt steht. Durch die überstehende spiralförmige Verbindungsschweißnaht 33 weist der Bohrschaft 18 eine geringe Kontaktfläche zum Bohrloch 27 oder zum Bohrkern 26 auf und erzeugt eine geringe Reibung. Je geringer die Reibung an der Außenseite 34 zwischen Bohrschaft 18 und Bohrloch 27 oder an der Innenseite 35 zwischen Bohrschaft 18 und Bohrkern 26 ist, umso grösser ist der Bohrfortschritt der ersten Nassbohrkrone 10 bei gleicher Leistung des Kernbohrgerätes und die Lebensdauer des Bohrschaftes 18 ist erhöht.

Beim Nassbohren mit der ersten Nassbohrkrone 10 ist eine Kühl- und Spülflüssigkeit erforderlich, die als Kühlflüssigkeit die Schneidsegmente 17 kühlt und als Spülflüssigkeit Bohrklein aus dem Bohrloch 27 abtransportiert. Die an der Außenseite 34 des Bohrschaftes 18 überstehende spiralförmige Verbindungsschweißnaht 33 kann neben der Führung des Bohrschaftes 18 über das Bohrloch 27 den Abtransport von mit Bohrklein versetzter, verbrauchter Kühl- und Spülflüssigkeit unterstützen. Die spiralförmige Verbindungsschweißnaht 33 wirkt als Förderwendel für die mit Bohrklein versetzte, verbrauchte Kühl- und Spülflüssigkeit, wenn die Drehrichtung der ersten Nassbohrkrone 10 und die Verlaufsrichtung der spiralförmigen Verbindungsschweißnaht 33 an der Außenseite 34 des Bohrschaftes 18 übereinstimmen.

Um saubere Kühl- und Spülflüssigkeit an der Innenseite 35 des Bohrschaftes 18 zuzuführen, sind an der Innenseite 35 des Bohrschaftes 18 drei Vertiefungen **37A, 37B, 37C** angeordnet, die als erste Vertiefung 37A, zweite Vertiefung 37B und dritte Vertiefung 37C bezeichnet werden. Die Vertiefungen 37A, 37B, 37C werden vor dem Umformen des Bandmaterials 31 zum Spiralrohr 32 im Blech erzeugt und dienen beim Nassbohren mit der ersten Nassbohrkrone 10 als Transportkanal für die notwendige Kühl- und Spülflüssigkeit. Die Vertiefungen 37A, 37B, 37C sind vor allem bei einem geringen Innenspalt zwischen Bohrkern 26 und Bohrschaft 18 notwendig. Die Anzahl der Vertiefungen 37A, 37B, 37C, die Geometrie der Vertiefungen 37A, 37B, 37C und die Anordnung der Vertiefungen 37A, 37B, 37C auf der Außenseite 34 und/oder Innenseite 35 des Bohrschaftes 18 können an die Flüssigkeitsmenge der Kühl- und Spülflüssigkeit angepasst werden.

Die an der Innenseite 35 des Bohrschaftes 18 vorgesehenen Vertiefungen 37A, 37B, 37C dienen zur Zuführung von sauberer Kühl- und Spülflüssigkeit und an der Außenseite 34 des Bohrschaftes 18 vorgesehene Vertiefungen können den Abtransport von mit Bohrklein versetzter, verbrauchter Kühl- und Spülflüssigkeit unterstützen. Da die Vertiefungen 37A, 37B, 37C bei der ersten Nassbohrkrone 10 vor dem Umformen des Bandmaterials 31 erzeugt werden, können an der Innenseite 35 des Bohrschaftes 18 mit geringem Fertigungsaufwand Vertiefungen hergestellt werden.

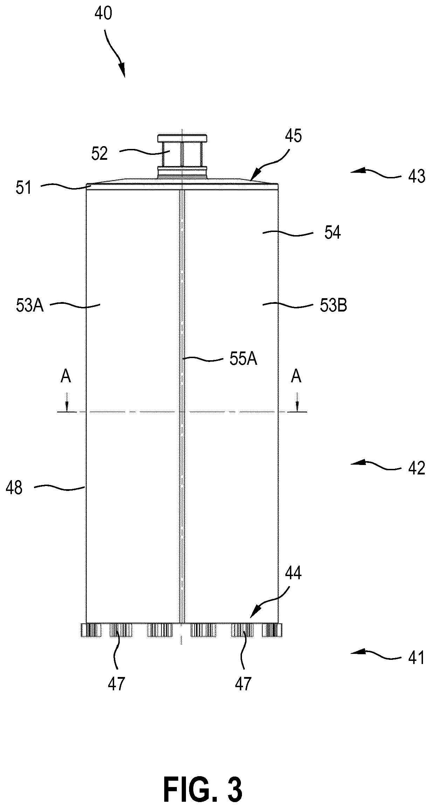

**FIG. 3** zeigt eine zweite Ausführungsform einer Nassbohrkrone **40** mit einem längsnahtgeschweißten Bohrschaft, der mit dem erfindungsgemäßen Verfahren zur Herstellung eines Bohrschaftes hergestellt wurde. Die Nassbohrkrone 40 wird im Folgenden als zweite Nassbohrkrone 40 bezeichnet und umfasst einen Schneidabschnitt **41**, einen Bohrschaftabschnitt **42** und einen Aufnahmeabschnitt **43**, wobei der Schneidabschnitt 41 und der Bohrschaftabschnitt 42 über eine erste Verbindungseinrichtung **44** verbunden sind und der Bohrschaftabschnitt 42 und der Aufnahmeabschnitt 43 über eine zweite Verbindungseinrichtung **45** verbunden sind.

Der Schneidabschnitt 41 umfasst mehrere Schneidsegmente **47**, die einen Schneidring mit einem Innendurchmesser, der dem Kerndurchmesser d₁ entspricht, und einem Außendurchmesser, der dem Bohrlochdurchmesser d₂ entspricht, bilden. Der Bohrschaftabschnitt 42 umfasst einen längsnahtgeschweißten Bohrschaft **48**, der mit den Schneidsegmenten 47 über die erste Verbindungseinrichtung 44 und mit dem Aufnahmeabschnitt 13 über die zweite Verbindungseinrichtung 45 verbunden ist Der Aufnahmeabschnitt 43 umfasst einen Deckel **51** und ein Einsteckende **52**, über das die zweite Nassbohrkrone 40 in einer Werkzeugaufnahme eines Kernbohrgerätes befestigt wird.

Die erste und zweite Verbindungseinrichtung 44, 45 sind im Ausführungsbeispiel als nicht-lösbare Verbindungseinrichtungen in Form einer Schweißverbindung ausgebildet. Grundsätzlich eignet sich jede erste Verbindungseinrichtung 44, die den Schneidabschnitt 41 und den Bohrschaftabschnitt 42 lösbar oder nicht-lösbar miteinander verbindet, und jede zweite Verbindungseinrichtung 45, die den Bohrschaftabschnitt 42 und den Aufnahmeabschnitt 43 lösbar oder nicht-lösbar miteinander verbindet.

Der Bohrschaft 48 ist in Form eines längsnahtgeschweißten Längsrohrkörpers ausgebildet und wurde aus drei Bandmaterialien **53A, 53B, 53C** in Form von ebenen Blechen durch Formen und Schweißen gefertigt. Die Bandmaterialien 53A, 53B, 53C wurden in einer Formanlage zu einem Längsrohrkörper **54** umgeformt und in einer Schweißanlage an den Bandkanten über drei längsverlaufende Verbindungsschweißnähte **55A, 55B, 55C** stoffschlüssig verbunden. Die Bandmaterialien 53A, 53B, 53C werden als erstes Bandmaterial 55A, zweites Bandmaterial 55B und drittes Bandmaterial 55C bezeichnet und die Verbindungsschweißnähte werden als erste Verbindungsschweißnaht 55A, zweite Verbindungsschweißnaht 55B und dritte Verbindungsschweißnaht 55C bezeichnet. Die erste Verbindungsschweißnaht 55A verbindet das erste und zweite Bandmaterial 53A, 53B, die zweite Verbindungsschweißnaht 55B verbindet das zweite und dritte Bandmaterial 53B, 53C und die dritte Verbindungsschweißnaht 55C verbindet das erste und dritte Bandmaterial 53A, 53C.

Die zweite Nassbohrkrone 40 zeigt einen Schneidabschnitt 41 mit mehreren Schneidsegmenten 47, die mittels der ersten Verbindungseinrichtung 44 am Bohrschaft 48 unlösbar befestigt sind. Der Schneidabschnitt 41 kann anstatt mehrerer Schneidsegmente 47 auch ein einzelnes als geschlossener Schneidring ausgebildetes Schneidsegment aufweisen. Außerdem kann der Schneidabschnitt 41 einen Ringabschnitt aufweisen, der zwischen den Schneidsegmenten 47 und dem Bohrschaft 48 angeordnet ist. Die Schneidsegmente 47 werden am Ringabschnitt verschweißt, verlötet, verschraubt oder in einer anderen geeigneten Befestigungsart am Ringabschnitt befestigt und der Ringabschnitt und der Bohrschaft 48 werden mittels der ersten Verbindungseinrichtung 44 lösbar oder unlösbar verbunden. Der Ringabschnitt kann wie der Bohrschaft 48 als längsnahtgeschweißtes Rohr ausgebildet sein. Allerdings bietet sich bei dünnen Bandmaterialien 53 die Verwendung von rohrförmigen Ringabschnitten mit einer konstanten Wandstärke an, da eine größere Kontaktfläche für die Befestigung der Schneidsegmente 47 zur Verfügung steht.

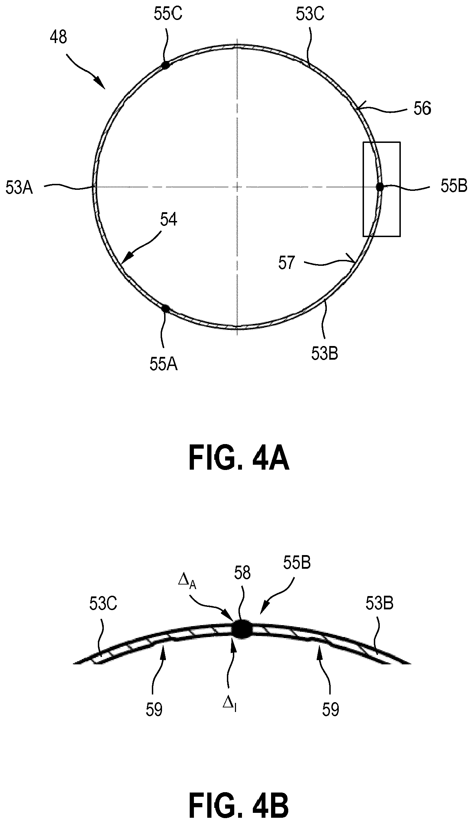

**FIGN. 4A****, B** zeigen einen Querschnitt durch den Bohrschaft 48 der zweiten Nassbohrkrone 40 der FIG. 3 entlang der Schnittlinie A-A in FIG. 3 (FIG. 4A) sowie ein Detail des Bohrschaftes 48 der FIG. 4A in einer vergrößerten Darstellung (FIG. 4B).

Die längsverlaufenden Verbindungsschweißnähte 55A, 55B, 55C des Bohrschaftes 48 sind an einer Außenseite **56** des Bohrschaftes 46 im Wesentlichen bündig mit dem Längsrohrkörper 54 ausgebildet und stehen an einer Innenseite **57** des Bohrschaftes 48 mit einem Innenüberstand Δ_{I} gegenüber dem Längsrohrkörper 54 über. Die an der Innenseite 57 des Bohrschaftes 48 überstehenden längsverlaufenden Verbindungsschweißnähte 55A, 55B, 55C ermöglicht beim Bohren mit der zweiten Nassbohrkrone 40 eine Führung des Bohrschaftes 48 über den Bohrkern 26. Um die überstehenden längsverlaufenden Verbindungsschweißnähte 55A, 55B, 55C zu erzeugen, wird beim Schweißen des Längsrohrkörper 54 ein Nahtmaterial **58** verwendet, das das benötigte Materialvolumen zur Verfügung stellt.

Das Nahtmaterial 58 kann pulverförmig, drahtförmig oder bandförmig ausgebildet sein. Über die Materialeigenschaften des Nahtmaterials 58 können die Eigenschaften der Verbindungsschweißnähte 55A, 55B, 55C angepasst werden. Das Nahtmaterial 58 kann die gleichen Materialeigenschaften oder unterschiedliche Materialeigenschaften wie die Bandmaterialien 53A, 53B, 53C aufweisen. Wenn das Nahtmaterial 58 und die Bandmaterialien 53A, 53B, 53C die gleichen Materialeigenschaften aufweisen, entsteht beim Schweißen der Bandkanten ein gleichmäßiger Übergang und das Nahtmaterial 58 kann sich gut mit den Bandmaterialien 53A, 53B, 53C verbinden. Durch den Einsatz von Nahtmaterial 58, das beispielsweise eine höhere Zugfestigkeit und/oder eine höhere Verschleißbeständigkeit als die Bandmaterialien 53A, 53B, 53C aufweist, können die Eigenschaften der Verbindungsschweißnähte 55A, 55B, 55C beeinflusst werden.

Die zweite Nassbohrkrone 40 zeigt einen Bohrschaft 48 mit Verbindungsschweißnähten 55A, 55B, 55C, die an der Außen- und Innenseite 56, 57 des Bohrschaftes 48 gegenüber dem Längsrohrkörper 54 überstehen. Alternativ können die Verbindungsschweißnähte 55A, 55B, 55C an der Außenseite 56 des Bohrschaftes 48 mit dem Außenüberstand Δ_{A} oder an der Innenseite 57 des Bohrschaftes 48 mit dem Innenüberstand Δ_{I} gegenüber dem Längsrohrkörper 54 überstehen. Der Überstand der Verbindungsschweißnähte 55A, 55B, 55C wird so eingestellt, dass die Verbindungsschweißnähte 55A, 55B, 55C nach dem Anbohren an der Außenseite 56 des Bohrschaftes 48 mit dem Bohrloch 27 oder an der Innenseite 56 des Bohrschaftes 48 mit dem Bohrkern 26 in Kontakt steht.

Beim Nassbohren mit der zweiten Nassbohrkrone 40 ist eine Kühl- und Spülflüssigkeit erforderlich, die als Kühlflüssigkeit die Schneidsegmente 47 kühlt und als Spülflüssigkeit Bohrklein aus dem Bohrloch 27 abtransportiert. Um saubere Kühl- und Spülflüssigkeit der Innenseite 57 des Bohrschaftes 48 zuzuführen, sind an der Innenseite 57 des Bohrschaftes 48 mehrere Vertiefungen **59** angeordnet. Die Vertiefungen 59 werden vor dem Umformen der Bandmaterialien 53A, 53B, 53C zum Längsrohrkörper 54 im Blech erzeugt und dienen beim Nassbohren mit der zweiten Nassbohrkrone 40 als Transportkanal für die notwendige Kühl- und Spülflüssigkeit. Die Vertiefungen 59 sind vor allem bei einem geringen Innenspalt zwischen Bohrkern 26 und Bohrschaft 48 notwendig. Die Anzahl der Vertiefungen 59, die Geometrie der Vertiefungen 59 und die Anordnung der Vertiefungen 59 auf der Außenseite 56 und/oder Innenseite 57 des Bohrschaftes 48 können an die Flüssigkeitsmenge der Kühl- und Spülflüssigkeit angepasst werden.

## Patentansprüche

1. Verfahren zur Herstellung eines Bohrschaftes (18; 48) für eine Nassbohrkrone (10; 40), die ein Bohrloch (27) mit einem Bohrlochdurchmesser (d₂) und einen Bohrkern (26) mit einem Kerndurchmesser (d₁) erzeugt, aufweisend:
▪ N, N ≥ 1 Bandmaterialien (31; 53A, 53B, 53C) werden zu einem Rohrkörper (32; 54) geformt und
▪ der Rohrkörper (32; 54) wird an den Bandkanten über N Verbindungsschweißnähte (33; 55A, 55B, 55C) stoffschlüssig verbunden,
**dadurch gekennzeichnet, dass** zumindest ein Bandmaterial der N, N ≥ 1 Bandmaterialien (31; 53A, 53B, 53C) vor dem stoffschlüssigen Verbinden der Bandkanten mit mindestens einer Vertiefung (37A, 37B, 37C; 59) versehen wird.

2. Verfahren nach Anspruch 1, **dadurch gekennzeichnet, dass** die N, N ≥ 1 Bandmaterialien (31) zu einem Spiralrohrkörper (32) geformt werden und der Spiralrohrkörper (32) an den Bandkanten über N spiralförmige Verbindungsschweißnähte (33) stoffschlüssig verbunden wird.

3. Verfahren nach Anspruch 1, **dadurch gekennzeichnet, dass** die N, N ≥ 1 Bandmaterialien (53A, 53B, 53C) zu einem Längsrohrkörper (54) geformt werden und der Längsrohrkörper (54) an den Bandkanten über N längsverlaufende Verbindungsschweißnähte (55A, 55B, 55C) stoffschlüssig verbunden wird.

4. Verfahren nach einem der Ansprüche 1 bis 3, **dadurch gekennzeichnet, dass** die mindestens eine Vertiefung (37A, 37B, 37C; 59) des Rohrkörpers (32; 54) an einer Innenseite (35; 57) des Bohrschaftes (18; 48) erzeugt wird.

5. Verfahren nach einem der Ansprüche 1 bis 3, **dadurch gekennzeichnet, dass** die mindestens eine Vertiefung des Rohrkörpers (32; 54) an einer Außenseite (34; 56) des Bohrschaftes (18; 48) erzeugt wird.

6. Verfahren nach einem der Ansprüche 1 bis 3, **dadurch gekennzeichnet, dass** mindestens eine Vertiefung (37A, 37B, 37C; 59) des Rohrkörpers (32; 54) an einer Innenseite (35; 57) des Bohrschaftes (18; 48) und mindestens eine Vertiefung des Rohrkörpers (32; 54) an einer Außenseite (34; 56) des Bohrschaftes (18; 48) erzeugt werden.
